# EUROPEAN PATENT APPLICATION

(11) **EP 4 834 849 A1**
(43) Date of publication of application: **04.11.2026**
(21) Application number: 25745999.0
(22) Date of filing: 09.06.2025
(51) Int. Cl.: C02F 1/00, B01D 24/10, B01D 24/46

(54) **MINIATURISED WATER FILTRATION STATION**

(30) Priority: 07.06.2024 PT 2024119518
(71) Applicant: Ark - Indústria, Lda, 4430-059 Vila Nova de Gaia (PT)
(72) Inventor: AIRES PEREIRA COSTA, Nelson, 4430-059 Vila Nova de Gaia (PT)
(74) Representative: do Nascimento Gomes, Rui
(86) International application number: PCT/IB2025/055888
(87) International publication number: WO 2025/253359

(57) **Abstract**

The present disclosure falls within the technical field of miniaturised, laboratory or experimental systems for water treatment and filtration, defining a miniaturised station for water filtration, particularly wastewater filtration. The station of the present disclosure and the elements that it contains are miniaturised when compared to large-scale stations, such as wastewater treatment and filtration plants connected to the sewage network and forming part of the installed water treatment and filtration infrastructure. This technical field thus includes that of miniaturised systems, in a laboratory and/or experimental system context, the present disclosure defining a water filtration station. The station of the present disclosure and the elements that it contains are miniaturised when compared to large-scale plants, such as water treatment and filtration plants within large infrastructures.

## Description

### FIELD OF DISCLOSURE

The present disclosure falls within the technical field of miniaturised, laboratory or experimental systems for water treatment and filtration, defining a miniaturised station for water filtration, particularly wastewater filtration. The station of the present disclosure and the elements that it contains are miniaturised when compared to large-scale stations, such as wastewater treatment and filtration plants connected to the sewage network and forming part of the installed water treatment and filtration infrastructure.

This technical field thus includes that of miniaturised systems, in a laboratory and/or experimental system context, the present disclosure defining a water filtration station. The station of the present disclosure and the elements that it contains are miniaturised when compared to large-scale stations, such as water treatment and filtration plants within large infrastructures.

### STATE OF THE ART

The state of the art includes solutions that seek to simulate the operation of water treatment and filtration plants, such as wastewater treatment and filtration plants, for teaching purposes.

These solutions simulate the operation of plants, including elements that, for example, are intended to represent contaminants, but which are not contaminants, consisting only of fictitious elements with the aim of demonstrating - particularly to trainees who operate or accompany the operation of these systems - how the said treatment and filtration plants work, typically in a learning context.

These systems are not functional and do not make it possible to effectively treat the water, at least no more than removing these fictitious elements from the water or showing by other means how a water treatment and filtration plant would work. These stations do not allow for laboratory development and research.

Therefore, they do not require their components to function effectively to treat or filter water, wastewater or in general.

The miniaturised station of the present solution makes it possible to treat, test and/or control in an innovative/efficient way new models for treating and filtering contaminated water. This can include different types of filter technologies and different filter materials with multiple combinations, perfect for a scientific development, research and learning environment.

### SUMMARY OF THE DISCLOSURE

The present disclosure includes a miniaturised water filtration station, the station comprising a filtration column (F301) and at least two tanks suitable for containing liquids, a first tank (B301) and a second tank (B302), wherein:
the filtration column is suitable for containing a gravity filtration medium inside and comprises a water inlet formed at the top, a filtered water outlet formed at the bottom and a wash water outlet formed at the side,
the filtered water outlet of the filtration column is connected to an inlet of the first tank and the wash water outlet of the filtration column is connected to a water inlet of the second tank,

the station additionally comprising
   a controllable first valve (V302) and second valve (V303) and a controllable first water pump (P311), the first water pump being configured to, when the first valve is closed and the second valve is open, pump water from the first tank into the filtration column through the filtered water outlet of the filtration column, and
   a third controllable valve (V305) connected to the wash water outlet of the filtration column where, when open, water pumped from the first tank into the filtration column through the filtered water outlet of the filtration column flows into the second tank when it reaches the wash water outlet of the filtration column and after travelling through a filtration medium disposed inside the column,
wherein each of the tanks has a capacity of between 4 and 50 litres.

The second valve can be self-controlled and electronically controllable. The first and third valves, and the first pump, can be electronically controllable, the station being configured to start a pump activation programme, closing the first valve and opening the second and third valves so that water pumped from the first tank into the filtration column through the filtered water outlet of the filtration column reaches the wash water outlet of the filtration column and the second valve is open, and after passing through a filtration medium disposed inside the column, flows into the second tank. A seventh valve can simultaneously be activated by inserting filtered air into the filtration column when open, and when the water reaches the wash water outlet of the filtration column and the second valve is open, and after travelling through a filtration medium disposed inside the column, it flows into the second tank.

The station can comprise a controllable fourth valve (V301) and at least a second pump (P310), the fourth valve allowing water from an unfiltered water supply source to pass through (X301), and the second pump being controllable and pumping water from the water supply source.

The station additionally comprises a flow meter, the fourth valve allowing water from an unfiltered water supply source (X301) to pass through, and the second pump being controllable and pumping water from the water supply source according to the flow meter and in a predefined quantity, this quantity being definable according to the experiment, to the filtration column. The water passes through the stratified granules and is collected in the first tank (B301). The inlet of the first tank includes at least one level sensor (B322).

The station can comprise a fifth valve (V304), the fifth valve being connected to the water outlet of the first tank and to a filtered water outlet of the station (X302), the first water pump being configured to, when the first valve is closed, the second valve open and the fifth valve closed, pump water from the first tank into the filtration column through the filtered water outlet of the filtration column.

The station can further comprise a sixth valve (V306) that controls the outlet of the second tank (backwash water drain), the sixth valve allowing wash water, i.e. backwash water, inside the second tank from the column to exit through the outlet of the second tank.

The filtration column and the first and second tanks can be installed on at least one bench, this bench being mobile, optionally by means of wheels installed on an underside of the bench.

The present disclosure further includes a system comprising the station of the present disclosure and control means, the control means being configured to electronically control any of the controllable elements, including any valve or pump.

The present disclosure additionally includes a method for water filtration in the water filtration station of the present disclosure, the filtration column comprising inside it a gravity filtration medium, optionally using grains/granules with different stratified grain sizes, the method comprising the steps of:
- obtaining water to be filtered in the filtration column, entering the filtration column through its water inlet and keeping the first, second and third valves closed,
- opening the first valve and/or the first valve and the fifth valve and obtaining filtered water at the water outlet of the station.

The method can additionally include waiting a period of time for the water to filter by gravity in the filtration column. This step can be carried out between the step of obtaining water to be filtered in the filtration column and the step of opening the first valve and/or the first valve and the fifth valve.

The step of opening the first valve and/or the first valve and the fifth valve and obtaining filtered water at the water outlet of the station can additionally include closing the second valve.

The grains or granules may be sand and/or anthracite.

The method can comprise the steps of:
- closing the first and fifth valves,
- activating the first pump and pumping water from the first tank into the filtration column through the water outlet of the filtration column,
- filling the filtration column with water up to a predefined volume, at a level in the filtration column above the wash water outlet of the filtration column, and
- opening the third valve, passing water from the filtration column to the second tank.

This method can more specifically comprise the steps of:
- closing the first and fifth valves,
- activating the first pump and pumping water from the first tank into the filtration column through the water outlet of the filtration column,
- filling the filtration column with water up to a predefined volume, at a level in the filtration column above the wash water outlet of the filtration column, and
- closing the first and second valves and opening the third valve, passing water from the filtration column to the second tank.

Alternatively, this method can more specifically comprise the steps of:
- closing the first and fifth valves,
- activating the first pump and pumping water from the first tank into the filtration column through the water outlet of the filtration column,
- filling the filtration column with water up to a predefined volume, at a level in the filtration column above the wash water outlet of the filtration column, and
- opening the third valve, passing water from the filtration column to the second tank.

The step of closing the first and fifth valves can comprise closing the first valve and opening the second valve and/or closing the first and fifth valves and opening the second valve.

The present disclosure may additionally have one or more filtration columns. These filtration columns may contain granules/grains that are different in size and/or material. They may therefore have one or more types of integrated technologies and/or multiple types of filter materials and combinations. The columns can be arranged in series or parallel.

### DESCRIPTION OF THE FIGURES

Figure 1 - schematic representation of a station according to the present disclosure. It includes a water supply inlet to the station (X301), which may be connected to another station that carries out a previous water treatment process or to a water supply means that supplies water that needs to be filtered. Connected to this inlet is a fourth valve (V301), which, when open, allows water from the station's water supply inlet to reach a second water pump (P310). When activated, the second water pump pumps water from the station's water supply inlet, which can be according to the flow meter and in the right quantity according to the experiment, into a filtration column (F301) through an inlet formed at the top. The filtration column has an outlet formed at the side for wash water from the filtration medium to exit and an outlet formed at the bottom for filtered water to exit. A first tank (B301) is connected to the filtered water outlet. A first electronically controllable valve (V302) is provided between the filtered water outlet of the filtration column and the water inlet of the first tank. When this valve is open, water filtered through the filtration column reaches the inside of the first tank. The station can include a level sensor (B322) in the first tank to control the level and the efficiency of the quantity of pre-treated water and to monitor the filter saturation process. A fifth valve (V304) is connected to the outlet of the first tank. When the fifth valve is open, water from inside the first tank reaches a (filtered) water outlet (X302) of the station. A second valve (V303) and a first water pump (P311) are provided between the water outlet of the filtration column and the fifth valve. When the first valve is open and the second valve is closed, water filtered through the filtration column reaches the inside of the first tank. When the first and fifth valves are closed and the second valve is open, and the first pump is active, water is pumped from the first tank, exiting through its outlet, into the filtration column, entering it through its filtered water outlet, performing a process known as backwashing of the filtration medium disposed inside the filtration column. additionally, the seventh valve (V3-3V1) can be activated, feeding filtered air into the filtration column (F301).
   This makes it possible to fill the filtration column with water to a pre-defined volume at a level in the filtration column above the wash water outlet of the filtration column. The station includes a third electronically controllable valve (V305) connected to the wash water outlet of the filtration column. This valve can be opened during the pumping of water so that water passes laterally from the filtration column to the second tank (B302). The first and second valves can also be closed and the third valve opened, so that water passes from the filtration column to the second tank. Additionally, a sixth valve (V306) is connected to the outlet of the second tank. When this valve is opened, backwash water inside the second tank from the filtration column flows to a wash water outlet of the station (backwash water drain).

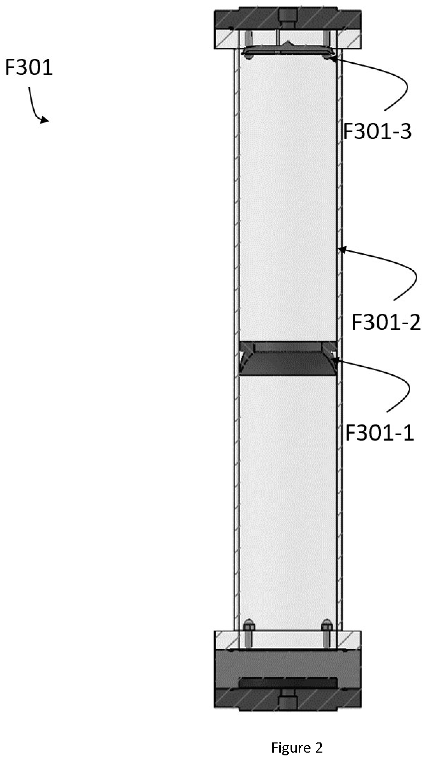

Figure 2 - side view of a filtration column (F301) according to the present disclosure, comprising a retaining ring (F301-1) arranged substantially centrally. The ring (F301-1), which is tubular and may be resilient, adapts to the inside of the column (F301-2), preventing granules forming the filtration medium from exceeding this level during backwashing. In other words, the ring (F301-1) fits onto the inner periphery of the column (F301-2), ensuring that the filter (F301) is watertight in this region and preventing the deep penetration of grains of different grain sizes. The column (F301) also includes a disperser (F301-3) which consists of a perforated plate adjustable to the top of the column. The perforations or openings in the plate (F301-33, not visible) allow better distribution of water coming from the water inlet of the column, causing the water to fall more uniformly over the entire top surface of the filtration medium.

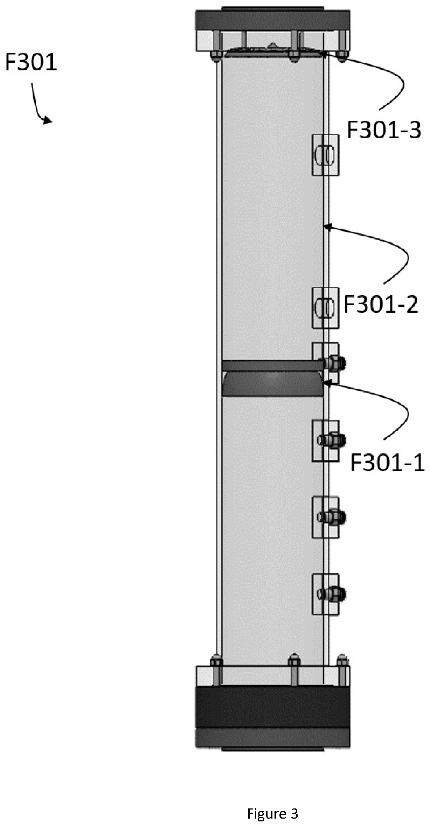

Figure 3 - another side view of the embodiment of Figure 2.

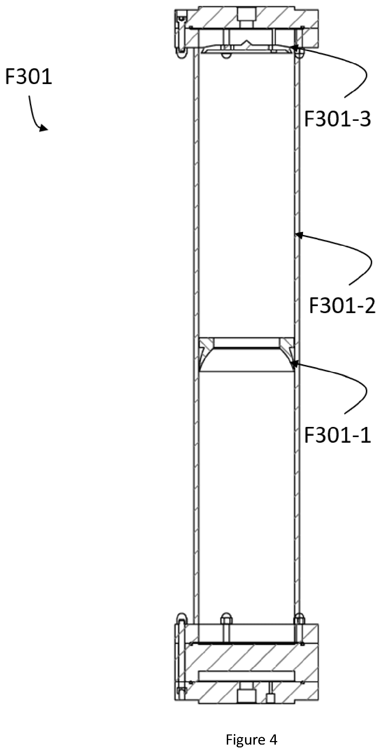

Figure 4 - cross-sectional view of the embodiment of figures 2 and 3.

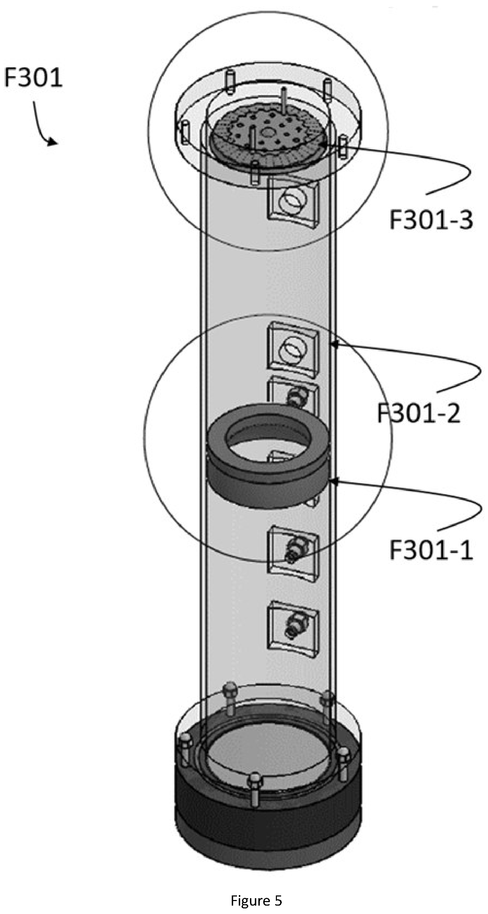

Figure 5 - perspective view of the embodiments of figures 2-4, showing the retaining ring (F301-1) and the disperser (F301-3).

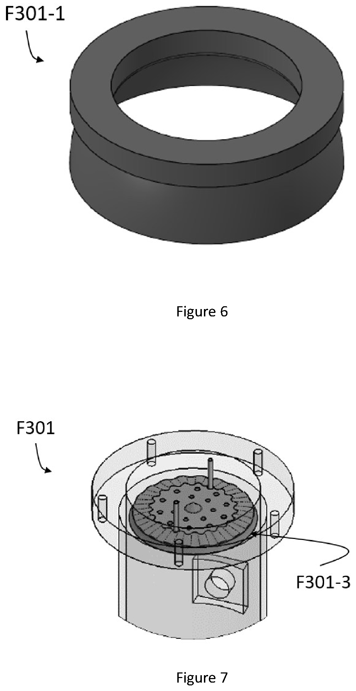

Figure 6 - perspective view of a retaining ring (F301-1).
Figure 7 - detailed perspective view of a disperser placed at the top of the retention column (F301-3).

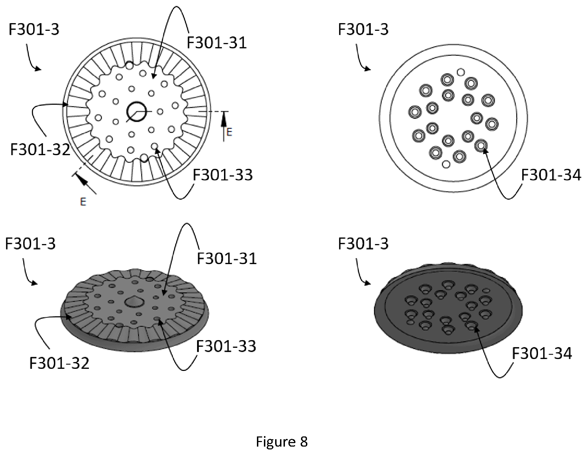

Figure 8 - top views (on the left) and bottom views (on the right) of dispersers (F301-3) in planar format (top) and three-dimensional format (bottom). The disperser (F301-3) contains, on its upper face, a flat central portion (F301-31) and a plurality of inclined peripheral portions (F301-32), the inclination projecting towards the lower face. The openings (F301-33) are formed in the flat central portion (F301-31) and pass through the plate to the lower face. On the lower face, the openings (F301-33) form projections (F301-34) that extend beyond the plate.

### DETAILED DESCRIPTION

The following are non-limiting embodiments of the object of the present disclosure.

The station allows water to be filtered, thus representing the feed/supply function, preliminary characterisation and the water treatment process, based on different water storage and circulation systems.

The station of the present disclosure defines a piece of equipment that allows for mobility capabilities, being able to define a mobile, digital monitoring and control system for filtering and/or treating water in real time with the possibility of augmented reality.

This station enables the intermediate treatment of pre-treated water, for example by oxidation, precipitation or flocculation processes, in a process of retaining suspended particles by filtration, recreating the real water and wastewater treatment processes, namely in the reduction of suspended matter commonly present in the water or coming from the treatment process itself.

The pollutants present in the water entering the filtration column are retained in the filtration media contained therein, such as different layers of grains or granules, e.g. sand or anthracite.

The filtration media can therefore contain stratified granules, which carry out the filtration, the stratification being organised by gradually increasing grain size, and in layers. Each layer has flaps, which can form a sealing ring on the inner periphery of the filter, preventing the deep penetration of grains of different grain sizes at the periphery. The set of granules is stacked vertically inside a transparent tubular medium to allow the experiments to be observed without affecting learning. Between each layer of granules, water samples can be collected for preliminary analyses and measurement of the turbidity of the water resulting from filtration in the different layers.

It is possible to measure the permeability of the granule filtration process and initiate a backwashing process, in which water coming from a first tank enters the filtration column through the outlet formed at the bottom.

The backwashing process and other circuits may include an airlock system to ensure efficiency and optimisation of the hydraulic process without the presence of air in the circuit.

The station may include mechanisms to enable digital measurement of clogging of the filter, both total and partial, allowing anomalies in the sizing and filtering processes to be verified according to the suspended particles, detecting unexpected intermediate clogging.

The whole process can be controlled automatically using programmed control means, i.e. software, as if it were an industrial-scale filtration plant, but also individually, allowing scope for scientific development and research into better processes, methods and best practices.

The control programme with data collection capability allows the parametrisation and activation of all the elements of the station, and they can be displayed in schematic or 3D form according to the standards.

The collection of data makes it possible to intervene directly to improve the process in real time or to be used in an integrated way with machine learning.

This station can be equipped with two tanks (for cleaning the granules and collecting the treated water), a set of sensors and actuators to allow continuous control of the process, as well as the collection of samples to measure turbidity due to the presence of solid particles in the water resulting from the pre-treated water.

This station can also be equipped with a continuous filter for comparing process efficiency between a conventional downflow and upflow filter and the continuous filter.

All the elements are of the quick-connect type, such as the pipework, sensors and actuators, allowing for easy, tool-free configurations and also providing extensive maintenance skills in processes of this nature.

The station of the present disclosure includes and/or enables:
- Separation of pollutants through granules, e.g. quartz sand and quartz gravel
- Deep filtration
- Measurement of pressure loss through the granule filter, e.g. sand filter
- Washing process for granule filters, e.g. sand filters
- Parameterisation of the steps of the process
- Level measurement using analogue pressure sensors
- Level measurement using different types of sensors
- Continuous process control and process energy efficiency
- Causes of turbidity in water
- Analysis and quantification of turbidity throughout the process
- Analysis of symbology and DTI scheme according to EN 62424:2010-01 and ISO 10628

The station may include:
- At least two transparent water tanks with a capacity of, for example, seven litres to allow the experiments to be observed without affecting learning, with a connection interface and sample collection ports.
- Transparent tubular filter module (or more than one module) to ensure good observation of the experiments without affecting learning, with capacity for different grain sizes, e.g. sands and anthracite. This module has two particular features:
   - height-adjustable disperser with central and lateral dispersion
   - flaps that can form a sealing ring between granules, for example sands, on the inner periphery of the filter
- Continuous filtration module
- Extensive range of electrical sensors
- Wide range of actuators
- Set of fittings, fastening and pipework with quick connection
- Airlock to remove air from pipes
- Double-check valve suitable for category 3 fluids
- Portable measuring equipment for analysing pH, conductivity, free and total chlorine, colour and turbidity
- Process control, data collection and IoT (Internet of Things) device

The processes that can be implemented by the station disclosed herein can be developed without compromising safety in the learning and research environment.

In a second aspect of the present disclosure, it includes a disperser (F301-3) which contains, on an upper face thereof, a flat central portion (F301-31) and a plurality of inclined peripheral portions (F301-32), the inclination projecting towards the lower face. The openings (F301-33) are formed in the flat central portion (F301-31) and pass through the plate to the lower face. On the lower face, the openings (F301-33) form projections (F301-34) that extend beyond the plate. The disperser thus includes a perforated plate adjustable to the top of a filtration column, a column with a tubular shape. The perforations or openings in the plate (F301-33) allow better distribution of water coming from the water inlet of the column, causing the water to fall more uniformly over the entire top surface of the filtration medium.

As will be clear to a person skilled in the art, the present disclosure should not be limited to the embodiments described herein, and various modifications are possible which remain within the scope of this disclosure.

Naturally, the embodiments presented above can be combined in the different possible forms, the repetition of all such combinations being herein avoided.

## Claims

1. Miniaturised water filtration station, the station comprising a filtration column (F301) and at least two tanks suitable for containing liquids, a first tank (B301) and a second tank (B302), wherein:
the filtration column is suitable for containing a gravity filtration medium inside and comprises a water inlet formed at the top, a filtered water outlet formed at the bottom and a wash water outlet formed at the side,
the filtered water outlet of the filtration column is connected to an inlet of the first tank and the wash water outlet of the filtration column is connected to a water inlet of the second tank,
the station additionally comprising
a controllable first valve (V302) and second valve (V303) and a controllable first water pump (P311), the first water pump being configured to, when the first valve is closed and the second valve is open, pump water from the first tank into the filtration column through the filtered water outlet of the filtration column, and
a controllable third valve (V305) connected to the wash water outlet of the filtration column where, when open, water pumped from the first tank into the filtration column through the filtered water outlet of the filtration column flows into the second tank when it reaches the wash water outlet of the filtration column and after travelling through a filtration medium disposed inside the column,
wherein each of the tanks has a capacity of between 4 and 50 litres.

2. Station according to the preceding claim, wherein the first, second and third valves, and the first pump, are electronically controllable, the station being configured to start a pump activation programme, closing the first valve and opening the second and third valves so that water pumped from the first tank into the filtration column through the filtered water outlet of the filtration column, when it reaches the wash water outlet of the filtration column and the second valve is open, and after travelling through a filtration medium disposed inside the column, flows into the second tank.

3. Station according to the preceding claim, wherein the second valve is self-controlled.

4. Station according to any of the preceding claims, wherein it further comprises a seventh valve (V3-3V1) configured to insert filtered air into the filtration column (F301), at the same time as the pumping of water from the first tank into the filtration column through the filtered water outlet of the filtration column.

5. Station according to any of the preceding claims, the station comprising a controllable fourth valve (V301) and at least a second pump (P310), the fourth valve allowing water from an unfiltered water supply source (X301) to pass through, and the second pump being controllable and pumping water from the water supply source to the filtration column.

6. Station according to the preceding claim, wherein it additionally comprises a flow meter, the fourth valve allowing water from an unfiltered water supply source (X301) to pass through, and the second pump being controllable and pumping water from the water supply source according to the flow meter and in a predefined quantity, this quantity being definable according to an experiment being carried out, to the filtration column, and in such a way that water passes through the stratified granules and is collected in the first tank (B301).

7. Station according to any of the preceding claims, wherein it comprises a fifth valve (V304), the fifth valve being connected to the water outlet of the first tank and to a filtered water outlet of the station (X302), the first water pump being configured to, when the first valve is closed, the second valve open and the fifth valve closed, pump water from the first tank into the filtration column through the filtered water outlet of the filtration column.

8. Station according to any of the preceding claims further comprising a sixth valve (V306) that controls the outlet of the second tank (Backwash Water Drain), the sixth valve allowing wash water inside the second tank from the column to exit through the outlet of the second tank.

9. Station according to any of the preceding claims, wherein the filtration column and the first and second tanks are installed on at least one bench, this bench being mobile, optionally by means of wheels installed on an underside of the bench.

10. System comprising the station of any of the preceding claims and control means, the control means being configured to electronically control any of the controllable elements, including any valve or pump.

11. Method for water filtration in the water filtration station of any of claims 1-9, the filtration column comprising inside it a gravity filtration medium, optionally stratified sands with different grain sizes, the method comprising the steps of:
• obtaining water to be filtered in the filtration column, entering the filtration column through its water inlet and keeping the first, second and third valves closed,
• opening the first valve and/or the first valve and the fifth valve and obtaining filtered water at the water outlet of the station,
• waiting a period of time for the water to be filtered by gravity in the filtration column.

12. Method for water filtration according to the preceding claim, wherein opening the first valve and/or the first valve and the fifth valve and obtaining filtered water at the water outlet of the station additionally includes closing the second valve.

13. Method for water filtration according to any of claims 11-12, wherein it comprises the steps of:
• closing the first and fifth valves,
• activating the first pump and pumping water from the first tank into the filtration column through the water outlet of the filtration column,
• filling the filtration column with water up to a predefined volume, at a level in the filtration column above the wash water outlet of the filtration column, and
• opening the third valve, passing water from the filtration column to the second tank.

14. Method for water filtration according to the preceding claim, wherein it comprises the steps of:
• closing the first and fifth valves,
• activating the first pump and pumping water from the first tank into the filtration column through the water outlet of the filtration column,
• filling the filtration column with water up to a predefined volume, at a level in the filtration column above the wash water outlet of the filtration column, and
• closing the first and second valves and opening the third valve, passing water from the filtration column to the second tank.

15. Method for water filtration according to claim 13, wherein it comprises the steps of:
• closing the first and fifth valves,
• activating the first pump and pumping water from the first tank into the filtration column through the water outlet of the filtration column,
• filling the filtration column with water up to a predefined volume, at a level in the filtration column above the wash water outlet of the filtration column, and
• opening the third valve, passing water from the filtration column to the second tank.
